Europäisches Patentamt

**European Patent Office**

**Office européen des brevets**

(11) Veröffentlichungsnummer: **0 436 098 A2**

# EUROPÄISCHE PATENTANMELDUNG

(21) Anmeldenummer: **90121953.5**

(22) Anmeldetag: **16.11.90**

(51) Int. Cl.⁵: **C02F 1/20, C02F 1/44, B01D 61/02**

(30) Priorität: **13.12.89 DE 3941131**

(43) Veröffentlichungstag der Anmeldung: **10.07.91 Patentblatt 91/28**

(84) Benannte Vertragsstaaten: **DE ES FR GB IT SE**

(71) Anmelder: **Fresenius AG**
**Gluckensteinweg 5**
**W-6380 Bad Homburg v.d.H.(DE)**

(72) Erfinder: **Polaschegg, Hans-Dietrich, Dr.**
**Grünwiesenweg 9**
**W-6370 Oberursel 4(DE)**

(74) Vertreter: **Dr. Fuchs, Dr. Luderschmidt**
**Dipl.-Phys. Seids, Dr. Mehler Patentanwälte**
**Abraham-Lincoln-Strasse 7, Postfach 4660**
**W-6200 Wiesbaden(DE)**

(54) **Verfahren zum Entgasen von bei der Umkehrosmose gewonnenem Reinwasser sowie Umkehrosmoseanlage zur Durchführung des Verfahrens.**

(57) Zur Verbesserung der Reinwasserqualität und zur Steigerung der Ausbeute einer Umkehrosmoseanlage, insbesondere einer Umkehrosmoseanlage für die Erzeugung von Reinwasser für medizinische Zwecke, ist diese auf der Reinwasserseite mit einer Entgasungseinrichtung (306) und auf der Rohwasserseite mit einer Heizeinrichtung (210) versehen. Die Entgasungseinrichtung weist eine Unterdruckpumpe (320) und einen Luftabscheider (330) auf. Der Heizeinrichtung (210) ist ein Wärmetauscher (230) vorgeschaltet, dessen Sekundärkreislauf (201) an die Rücklaufleitung (402) des Dialysegerätes (nicht dargestellt) und an die Retentatleitung (305) der Umkehrosmoseanlage angeschlossen ist.

## VERFAHREN ZUM ENTGASEN VON BEI DER UMKEHROSMOSE GEWONNENEM REINWASSER SOWIE UMKEHROSMOSEANLAGE ZUR DURCHFÜHRUNG DES VERFAHRENS

Die Erfindung betrifft ein Verfahren zum Entgasen von bei der Umkehrosmose gewonnenem Reinwasser sowie eine Umkehrosmoseanlage für die Erzeugung von Reinwasser, insbesondere Reinwasser für medizinische Zwecke mit einem Vorlaufbehälter, einem Umkehrosmosemodul, einer Hochdruckpumpe in der Verbindungsleitung zwischen dem Vorlaufbehälter und dem Umkehrosmosemodul, einer Konzentratleitung, die den Umkehrosmosemodul mit dem Vorlaufbehälter verbindet und mit einer Permeatleitung und einer davon abzweigenden Rückführleitung zum Vorlaufbehälter.

Bei der Hyperfiltration bzw. umgekehrten Osmose handelt es sich ebenso wie bei der Ultrafiltration um ein Druckfiltrationsverfahren. Der eigentliche Unterschied zwischen der Hyperfiltration und der Ultrafiltration liegt in der Größenordnung der durch den Prozeß abgetrennten Teilchen. Bei der umgekehrten Osmose werden im allgemeinen Teilchen oder Moleküle von einem Lösungsmittel abgetrennt, die ein relativ niedriges Molekulargewicht haben.

Werden zwei Lösungen unterschiedlicher Konzentration durch eine Membran, die für die gelösten Komponenten undurchlässig ist, getrennt, so ist das chemische Potential des Lösungsmittels in der verdünnten Lösung höher als in der konzentrierten Lösung und es kommt zu einem Lösungsmitteltransport von der verdünnten in die konzentrierte Lösung. Dies wird als Osmose bezeichnet.

Erhöht man den hydrostatischen Druck in der Lösung mit der höheren Konzentration, so erniedrigt sich der osmotische Lösungsmittelfluß und er kommt völlig zum Erliegen bzw. verläuft in umgekehrter Richtung, wenn der hydrostatische Druck eine bestimmte Größe erreicht hat. Dies wird als umgekehrte Osmose bezeichnet.

Da in zunehmendem Maße bei der Rein- und Reinstwassererzeugung auf Rohwasser minderer Qualität zurückgegriffen werden muß und gleichzeitig die Qualitätsanforderungen für das Prozeßwasser zunehmen, werden zu diesem Zweck zunehmend Umkehrosmoseanlagen eingesetzt, die in Konkurrenz zu den Ionaustauscherverfahren und den Destillationsverfahren treten.

Insbesondere für die klinische Hämodialyse ist eine gute Aufbereitung des Dialysewassers notwendig. Zu hohe oder schwankende Konzentration von Kalzium, Magnesium, Kalium und Natrium oder zu hohe Keimzahlen und Pyrogengehalte können bei der Behandlung Nebenwirkungen hervorrufen. Die Umkehrosmose hat daher bei der Aufbereitung von Dialysewasser in den letzten Jahren erheblich an Bedeutung gewonnen.

Die Umkehrosmoseanlagen werden kontinuierlich betrieben. Permeatseitig erfolgt möglichst keine Zwischenspeicherung von Reinstwasser, das heißt das den Dialysemaschinen zufließende Wasser kommt unmittelbar aus der Umkehrosmoseanlage. Die Armaturen, Meßfühler, Kreislaufleitungen etc. sind so konstruiert, daß keine Strömungstoträume in der Anlage auftreten, in denen es zu einer Verkeimung kommen kann. Daher werden als Materialien ausschließlich Kunststoffe und Edelstahl verwendet. Zusätzlich werden die Anlagen regelmäßig desinfiziert.

Es ist eine Umkehrosmoseanlage bekannt, die als separates Gerät an eine Hämodialyseeinrichtung angeschlossen werden kann. Diese Umkehrosmoseanlage besitzt ein Umkehrosmosemodul und einen Vorlaufbehälter der über eine Leitfähigkeitssonde und über ein Magnetventil an den Wasserzulauf angeschlossen ist. Das im Vorlaufbehälter befindliche Rohwasser wird über eine Pumpe dem Umkehrosmosemodul zugeführt, wo eine Membran angeordnet ist, durch die das mit hohem Druck ankommende Wasser als Filtrat hindurchtritt und über eine Auslaufleitung, die mit einem Permeatmagnetventil und einer weiteren Leitfähigkeitssonde ausgestattet ist, dem Dialysegerät zugeführt wird. Die Permeatleitung ist über eine Rücklaufleitung mit dem Vorlaufbehälter verbunden. Das Retentat, das aus dem Umkehrosmosemodul abfließt, wird wiederum dem Vorlaufbehälter bzw. dem Abfluß zugeführt. Der Vorlaufbehälter ist zusätzlich mit einem Impfanschluß für die Zuführung von Desinfektionsmittel ausgestattet.

Diese bekannte Umkehrosmoseanlage besitzt jedoch eine Reihe von Nachteilen. So wird mit unterschiedlicher Wassertemperatur und daher unterschiedlicher Ausbeute bei der Umkehrosmose gearbeitet. Der Wirkungsgrad der Pumpeneinheit ist äußerst gering und die spezifischen funktionalen Vorteile einer Integration von Umkehrosmoseanlage und Dialysegerät werden nicht genutzt. Außerdem entspricht das Reinwasser hinsichtlich der Entgasungsqualität nicht den gestiegenen Qualitätsanforderungen.

Insbesondere für die Hämodialyse muß jedoch entgastes Wasser verwendet werden, da die Dialysierflüssigkeit im Dialysator gewöhnlich unter Unterdruck gesetzt wird, um Ultrafiltration zu erreichen. Nicht entgastes Wasser wird dabei entgasen und den Dialysator mit Luft füllen, was die Effektivität der Dialyse heruntersetzt.

Aus der DE-PS 28 58 204 ist bekannt, das Wasser in einer separaten, der Dialyseeinrichtung vorgeschalteten Versorgungseinheit zwecks Entgasung mit Hilfe einer Pumpe, der Entgasungspumpe, durch eine Drossel und einen dahinter geschalteten Behälter zu saugen. Im Unterdruckbereich wird Gas in kleinen Blasen freigesetzt, durch die Pumpe gepumpt und druckseitig abgeschieden.

Aus Wetzels et al."Hämodialyse, Peritonealdialyse, Membranplasmapherese", Springer Verlag 1986, S. 104 + 105 ist ein separates Unterdruckentgasungssystem bekannt, die auf der Unterdruckseite im Leitungssystem eine regelbare Drossel aufweist.

Nun dauert der Entgasungsprozeß aber eine Zeit lang, wenn Wasser einem Unterdruck ausgesetzt wird. Um eine bestimmte Entgasungsqualität zu erreichen, kann entweder die Verweildauer im Unterdruckbereich erhöht werden, was z.B. durch teilweise mehrfache Rezirkulation des Wassers bzw. der Dialysierflüssigkeit erfolgen kann, oder aber man bringt Keime nach Art der Kristallisationskeime oder Störstellen im Wasser ein, die zu einer schnelleren Gasfreisetzung führen. Bekannt ist z.B. eine Kammer im Unterdruckbereich mit Füllkörpern oder einer inerten wolligen Substanz zu füllen. Diese Füllkörper haben jedoch den Nachteil, daß sie gleichzeitig ein gutes Substrat für Keimwachstum darstellen.

Aufgabe dar vorliegenden Erfindung ist daher ein Verfahren und eine Umkehrosmoseanlage, mit der diese Nachteile vermieden werden sollen, wobei insbesondere die Effektivität und die Entgasungsqualität des Reinwassers verbessert und dabei eine Einsparung von Komponenten erzielt werden soll.

Diese Aufgabe wird mit einem Verfahren gemäß Anspruch 1 und einer Umkehrosmoseanlage gemäß Anspruch 4 gelöst. Vorteilhafte Ausgestaltungen sind Gegenstand der Unteransprüche.

Es hat sich überraschend gezeigt, daß die Entgasungsqualität des Reinwassers unter Einsparung von Komponenten deutlich verbessert werden kann, wenn das Reinwasser aus der Permentkammer des Umkehrmoduls mittels einer Unterdruckpumpe so abgepumpt wird, daß in der Permeatkammer ein Unterdruck aufrechterhalten wird, und daß die sich dabei freisetzenden Gase in einem der Unterdruckpumpe nachgeschalteten Luftabscheider entfernt werden.

Die Umkehrosmoseanlage ist dadurch gekennzeichnet, daß in der Permeatkammer am Ausgang des Reinwasserkompartiments des Umkehrosmosemoduls eine Entgasungseinrichtung angeordnet ist.

Der Vorteil der Anordnung liegt darin, daß die Umkehrosmosemembran gleichzeitig für die Entgasung eingesetzt werden kann. Die Umkehrosmosemembran weist eine große Oberfläche auf, die, wenn sie unter Unterdruck gesetzt wird, gleichzeitig eine Reaktionsfläche für die Gasfreisetzung darstellt. Wird also die Umkehrosmosemembran direkt als Drossel benutzt, so ist gleichzeitig eine große Reaktionsfläche vorhanden, die zu einer effektiven Gasfreisetzung führt. Eine zusätzliche Drosseleinrichtung wird damit entbehrlich.

Die Entgasungseinrichung weist eine Unterdruckpumpe und einen Luftabscheider auf. Die Unterdruckpumpe ist an das Reinwasserkompartiment des Umkehrosmosemoduls angeschlossen. Das Reinwasser wird somit von dieser Unterdruckpumpe abgepumpt, wobei die Pumpe so geregelt ist, daß sich ein Unterdruck von ca. 600 mm Hg ergibt. Dabei kommt es zu einer Entgasung des Reinwassers. In dem der Unterdruckpumpe nachgeschalteten Luftabscheider, der als Zyklon ausgebildet sein kann, werden die Gasblasen vom Wasser getrennt und gelangen in eine, an der Luftabscheider angeschlossene Rezirkulationsleitung. Das Reinwasser fließt dann über eine Leitung zum Verbraucher, z.B. zu einem Hämodialysegerät, während die Luft und überschüssiges Reinwasser über die entsprechende Rezirkulationsleitung zum Vorlaufbehälter zurückbefördert werden, wo dann die Luft ungehindert entweichen kann. Die Entgasung des Reinwassers steigert sowohl die Qualität des Wassers als auch die Effektivität der gesamten Anlage, da Luftblasen enthaltendes Reinwasser nicht mehr verworfen werden muß.

Um die Effektivität der Umkehrosmoseanlage weiter zu steigern ist zwischen dem Vorlaufbehälter und dem Umkehrosmosemodul eine Heizeinrichtung vorgesehen. Zusätzlich kann der Heizeinrichtung noch eine Wärmetauschereinheit vorgeschaltet sein, wobei der Primärkreislauf des Wärmetauschers zwischen dem Vorlaufbehälter und der Heizeinrichtung angeordnet ist. Der Sekundärkreislauf des Wärmetauschers befindet sich in der vom Umkehrosmosemodul kommenden Rücklaufleitung, in der das erwärmte Retentat entweder zum Vorlaufbehälter zurück oder zum Auslauf befördert wird. An diese Retentatleitung kann vor dem Sekundärkreislauf des Wärmetauschers noch eine Verbindungsleitung angeschlossen sein, durch die das verbrauchte Reinwasser, das ebenfalls erwärmt ist, von dem Reinwasserverbraucher zurückfließt.

Durch diese Vorerwärmung mittels des Wärmetauschers wird der Energieverbrauch der Heizeinrichtung reduziert. Die Heizeinrichtung besteht aus einer Heizkammer, der die bereits vorgewärmte Flüssigkeit zugeführt wird. Durch einen Temperaturfühler und eine damit verbundene Regeleinheit wird die Flüssigkeit auf eine vorbestimmte Temperatur, vorzugsweise zwischen 20 und 34 Grad C gebracht und auf dieser Temperatur gehalten.

Das erwärmte Rohwasser strömt über eine Verbindungsleitung von dieser Heizeinrichtung zu einer Leitfähigkeitsmeßzelle, mit der die Leitfähigkeit des Rohwassers zwecks Beurteilung der Funktionsfähigkeit des Umkehrosmosemoduls gemessen wird und von dort über ein weiteres Leitungsstück zum Umkehrosmosemodul.

Vor dem Umkehrosmosemodul ist eine Hochdruckpumpe angeordnet, um den erforderlichen Überdruck in dem Umkehrosmosemodul zu erzeugen. Diese Hochdruckpumpe ist vorzugsweise mit einer weiteren in der vom Umkehrosmosemodul kommenden Rücklaufleitung (Retentatleitung) angeordneten Entspannungspumpe gekoppelt. Vorzugsweise beträgt das Fördervolumen der Entspannungspumpe bis zu ca. 70% (50-70%) des Fördervolumens der Hochdruckpumpe. Dadurch entsteht auf der Rohwasserseite ein Überdruck, der zur Filtration der durch die Fördervolumendifferenz bestimmten Menge Wassers durch die Membran führt. Durch die Entspannung des Retentates wird die Entspannungspumpe angetrieben, die aufgrund der Kopplung mit der Hochdruckpumpe diese mit antreibt. Auf diese Weise wird der Energieverbrauch der gesamten Umkehrosmoseanlage gegenüber den bekannten Anlagen nach dem Stand der Technik deutlich verringert.

Zur Vereinfachung der Desinfektion der gesamten Anlage einschließlich des Reinwasserverbrauchers sieht die Erfindung mehrere Möglichkeiten vor. Ist als Reinwasserverbraucher ein Hämodialysegerät angeschlossen, so verfügt dieses in der Regel über eine Desinfektionsmittelansaugvorrichtung. Das Dialysegerät wird in diesem Fall in den Desinfektionsmodus geschaltet. Das vom Dialysegerät abfließende Desinfektionsmittelgemisch wird erfindungsgemäß nicht zum Auslauf befördert, sondern durch ein Rezirkulationsventil zum Vorlaufbehälter umgeleitet, von wo es in den Osmosekreislauf und anschließend in die Dialyseeinrichtung zurückgelangt. Auf diese Weise wird sowohl die Umkehrosmoseanlage als auch das angeschlossene Hämodialysegerät desinfiziert.

Gemäß einer weiteren Ausführungsform ist an die vom Reinwasserverbraucher kommende Rücklaufleitung, die in den Wärmetauscher führt, zusätzlich eine Desinfektionsmittelzuführleitung angeschlossen. Die Einspeisung des Desinfektionsmittels oder Desinfektionsmittelkonzentrates erfolgt somit nicht in der Dialyseeinrichtung sondern in der Umkehrosmoseanlage. Auch bei dieser Alternative ist das Rezirkulationsventil in der Weise geschaltet, daß das Desinfektionsmittel oder Desinfektionsmittelkonzentrat in den Vorlaufbehälter und von dort in den Umkehrosmosekreislauf und den Dialysekreislauf gelangt.

Weiterhin ist erfindungsgemäß die Umkehrosmoseanlage zur Heißdesinfektion ausgelegt. Zu diesem Zweck wird die Heizeinrichtung auf ca. 90 Grad eingestellt und das in der zwischen dem Sekundärkreislauf des Wärmetauschers und dem Vorlaufbehälter befindliche Rezirkulationsventil wird auf Rezirkulation eingestellt.

Um diese genannten Vorgänge entsprechend zu steuern, ist eine Regel- und Steuereinheit (zweite Regel- und Steuereinheit) vorgesehen, die unter anderem mit dem Rezirkulationsventil, der Heizeinrichtung und der Leitfähigkeitsmeßeinrichtung in der Rohwasserleitung verbunden ist.

Weiterhin ist eine Steuer- und Regeleinheit (erste Steuer- und Regeleinheit) für den Bereich des Vorlaufbehälters vorgesehen. Diese erste Regel- und Steuereinheit ist mit dem Rezirkulationsventil, einem in dem Vorlaufbehälter angeordneten Niveaumesser und der zweiten Regel- und Steuereinheit sowie einem Wassereingangsventil in der Zulaufleitung des Vorlaufbehälters verbunden. Wenn der Zulauf in den Vorlaufbehälter größer ist als der Ablauf, steigt das Niveau in der Niveaumeßkammer des Vorlaufbehälters an, das von einem Niveausensor, der ein Ultraschallsensor sein kann, laufend überwacht wird. Mit Hilfe der Steuer- und Regeleinheit ist es möglich, die Qualität des Rohwassers, das dem Umkehrosmosemodul zugeführt wird, einzustellen. Dies geschieht durch Mischung des Leitungswassers mit dem vom Umkehrosmosemodul bzw. vom Reinwasserverbraucher zurückfließenden Wassers. Das Mischungsverhältnis wird durch Steuerung des Wassereingangsventils und des Rezirkulationsventils gesteuert, wobei die von der in der Rohwasserleitung angeordneten Leitfähigkeitsmeßzelle gewonnenen Meßwerte, die den Regel- und Steuereinheiten zugeführt werden, entsprechend berücksichtigt werden. Bei einem vom Niveaumesser detektierten Absinken des Wasserspiegels im Vorlaufbehälter werden von der ersten Steuer- und Regeleinheit das Wassereingangsventil entsprechend geöffnet. Auf diese Weise kann die Qualität des dem Umkehrosmosemodul zugeführten Rohwassers optimal eingestellt werden, so daß die Ausbeute an Reinwasser gesteigert werden kann. Der Einfluß der Leitungswasserqualität auf die Permeatqualität kann somit gesteuert werden.

Durch die erfindungsgemäß vorgesehene Entgasungseinrichtung sowie durch die Heizeinrichtung wird die Reinwasserqualität deutlich gesteigert, wobei gleichzeitig die Ausbeute der Umkehrosmoseanlage gesteigert und konstant gehalten werden kann. Die erfindungsgemäße Umkehrosmoseanlage ist daher insbesondere als integrierter Bestandteil einer Dialyseeinrichtung zu verwenden.

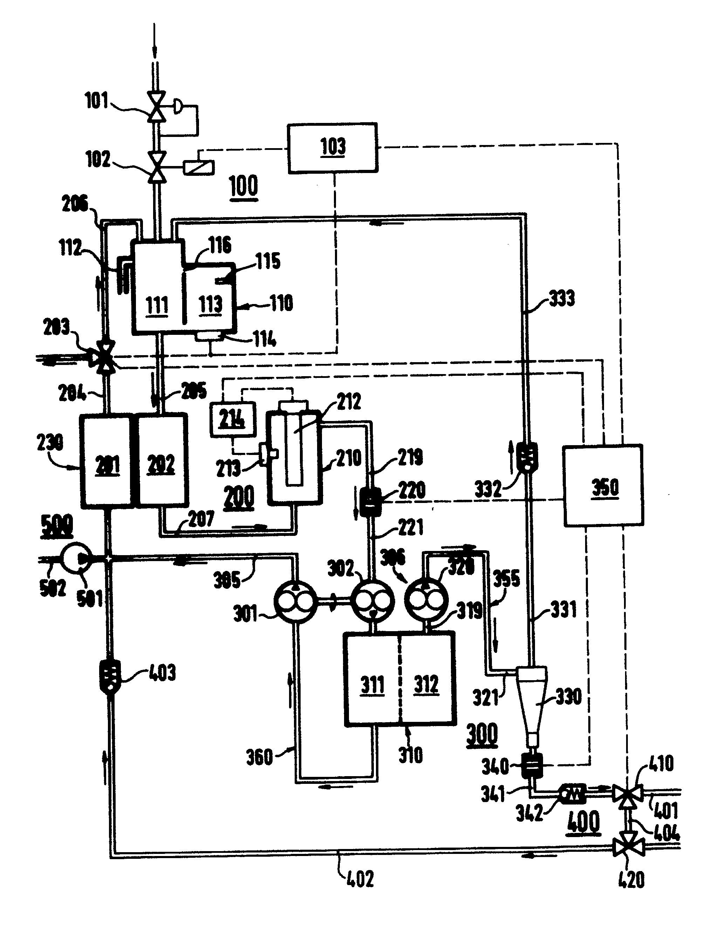

Aufbau und Funktionsweise einer beispielhaften Ausführungsform wird nachfolgend anhand der Figur näher erläutert.

Die erfindungsgemäße Umkehrosmoseanlage ist in der Figur schematisch dargestellt. Die gesamte Anlage besteht aus insgesamt fünf Baugruppen, die mit den Bezugszeichen 100, 200, 300, 400 und 500 gekennzeichnet sind. 100 bezeichnet die Einheit zur Regelung des Rohwasserzuflusses. 200 bezeichnet die Einheit zur Erwärmung des Rohwassers. Mit 300 ist die Umkehrosmoseeinheit nebst Entgasungseinheit bezeichnet und mit 400 wird die Baugruppe mit dem Reinwassereingangsventil 410 gekennzeichnet, von wo eine Leitung zum nicht näher dargestellten Reinwasserverbraucher führt. 500 deutet die optionale Einrichtung zur Zuführung von Desinfektionsmittel an.

Der Druck des Rohwassers, das über nicht näher bezeichnete mechanische Vorfilter, Enthärter oder Absaugereinheiten zum Ventil 101 gelangt, wird auf einen Wert reduziert, der unterhalb des Arbeitsdrucks des Wassereingangsventils 102 liegt. Dieser Druck liegt vorzugsweise zwischen 1 und 3 bar. Bei geöffnetem Wassereingangsventil 102 fließt das Rohwasser in die Wasserzulaufkammer 111 des Vorlaufbehälters 110. Der Vorlaufbehälter 110 weist eine der Kammer 111 benachbarte Niveaumeßkammer 113 auf, in der das Flüssigkeitsniveau laufend durch einen Ultraschall-Niveausensor 114 überwacht wird. Ist dieses Niveau auf ein über der Referenzmarke 115 vorbestimmtes Niveau angestiegen, so wird durch die Meß- und Steuereinheit 103, die unter anderem an den Ultraschall-Niveausensor 114 angeschlossen ist, das Wassereingangsventil 102 geschlossen. Sinkt nun der Wasserspiegel im Vorlaufbehälter 110, so kann je nach gemessener Rohwasserqualität entweder das Ventil 102 und/oder das Ventil 203 geöffnet werden, wodurch gleichzeitig ein bestimmtes Mischungsverhältnis eingestellt werden kann, so daß die Qualität des Rohwassers optimiert werden kann. Die Referenzmarke 115 dient der Autokalibrierung des Ultraschall-Niveausensors, der in bekannter Weise als Laufzeitsensor arbeitet. Er empfängt zwei Reflektionssignale, sobald das Wasserniveau über der Referenzmarke liegt. Das Auftreten zweier Reflexe kann bereits zur Niveauerkennung herangezogen werden. Andererseits kann aus dem Verhältnis der Laufzeit und dem bekannten Niveau der Referenzmarke die Höhe des Wasserspiegels in der Kammer 113 errechnet und aus dieser Information das Schaltsignal für das Wassereingangsventil 102 bzw. das Rezirkulationsventil 203 abgeleitet werden. Das Niveau kann dadurch zum Beispiel so geregelt werden, daß die Kammer 113 während der Desinfektion, die nachfolgend noch näher beschrieben wird, vollständig gefüllt wird. Selbstverständlich können auch andere Niveausensoren, z.B. ein Schwimmerschalter für diese Funktion herangezogen werden. Zusätzlich weist die Wasserzulaufkammer 111 noch einen Notauslauf 112 auf.

Der Auslauf der Kammer 111 des Vorlaufbehälters 110 ist über ein Schlauchstück 205 mit dem Primärkreislauf 202 des Wärmetauschers 230 verbunden, von wo das Rohwasser über die Leitung 207 der Heizeinrichtung 210 zugeführt wird. Der Sekundärkreislauf 201 des Wärmetauschers 230 ist sowohl an die Retentatleitung 360 als auch an die Rücklaufleitung 402 des Reinwasserverbrauchers angeschlossen.

Das Rohwasser wird auf diese Weise durch das im Gegenstrom durch den Sekundärkreislauf 201 fließende erwärmte Retentat der Umkehrosmoseeinheit 300 und evtl. durch die aus der Rücklaufleitung 402 zufließende verbrauchte Dialysierflüssigkeit vorgewärmt.

In der Heizkammer 210 wird das vorgewärmte Rohwasser durch das Heizelement 212, das durch den Temperaturfühler 213 und die daran angeschlossene Regeleinheit 214 geregelt wird, auf eine vorbestimmte Temperatur, bevorzugt zwischen 20 und 34 Grad C gebracht und auf dieser Temperatur gehalten.

Das erwärmte Rohwasser strömt dann über die Verbindungsleitung 219 zur Leitfähigkeitsmeßzelle 220, wo die Leitfähigkeit des Rohwassers zwecks Beurteilung der Funktionsfähigkeit der Umkehrosmoseeinheit und zwecks Steuerung der Ventile 102 und 203 gemessen wird. und von dort über das Leitungsstück 221 zur Umkehrosmoseeinheit 300. Die Leitfähigkeitsmeßzelle 220 ist an die zweite Regel- und Steuereinheit 350 angeschlossen.

Die Umkehrosmoseeinheit 300 weist u.a. die energetisch miteinander gekoppelten Pumpen 302 und 301, den Umkehrosmosemodul 310 mit den beiden Kompartimenten 311 für das Rohwasser und 312 für das Reinwasser, sowie die an die Reinwasserleitung 319 angeschlossenen Entgasungseinrichtung 306 auf.

Durch die energetisch miteinander gekoppelten Pumpen 302, 301 wird das Rohwasser durch das Rohwasserkompartiment 311 des Umkehrosmosemoduls 310 gepumpt. Die Pumpen 301, 302 arbeiten im wesentlichen volumetrisch, wobei das Fördervolumen pro Zeiteinheit der Pumpe 301 geringer als jenes der Pumpe 302 ist. Typischerweise beträgt das Fördervolumen der Pumpe 301 fünfzig bis siebzig Prozent des Fördervolumens der Pumpe 302. Dadurch entsteht auf der Rohwasserseite ein Überdruck, der zur Filtration der durch die Fördervolumendifferenz bestimmten Menge Wasser durch die Membran führt. Das Reinwasser wird durch die Pumpe 320 abgepumpt, die sich in der Leitung 319, 321 befindet.

Die Pumpe 320 ist so geregelt, daß sich ein Unterdruck von ca 600 mm Hg ergibt. Damit kommt es zu einer Entgasung des Rohwassers. Im daran angeschlossenen Luftabscheider 330 werden die Gasblasen vom Wasser getrennt. Das Reinwasser fließt über die Leitung 341 zum Reinwasserverbraucher, der im vorliegenden Fall ein Hämodialysegerät sein kann. Luft und überschüssiges Reinwasser werden über die Rezirkulationsleitung 331, 333 zum Vorlaufbehälter 110 zurückbefördert. Die Luft im zurückgeführten Permeat, welche durch die Entgasung entsteht, entweicht in der Wasserzulaufkammer 111 und tritt durch den Notauslauf 112 aus dem System.

In der Rezirkulationsleitung 331, 333 ist noch ein Rückschlagventil 332 angeordnet, um zu verhindern, daß Rohwasser in die Reinwasserleitung gelangt.

In der Verbindungsleitung 341 zum Reinwasserverbraucher ist eine Leitfähigkeitsmeßzelle 340, die an die Steuer- und Regeleinheit 350 angeschlossen, ein Rückschlagventil 342 und das Wassereingangsventil 410 angeordnet, das über die Leitung 401 zum Reinwasserverbraucher führt. Das Wassereingangsventil 410 ist elektrisch ebenfalls mit der Steuer- und Regeleinheit verbunden.

Die Differenz der Förderrate der Pumpen 301 und 302 bzw. die Förderrate der Pumpe 320 muß wenigstens im Mittel größer sein als der Bedarf der angeschlossenen Reinwasserverbraucher. Sollte dieser Bedarf kurzfristigen Schwankungen unterliegen, so kann der Luftabscheider 310 so bemessen werden, daß Bedarfsschwankungen ausgeglichen werden, ohne daß Luft in die Leitung 341 eintritt.

Die Retentatleitung 360, in der die Pumpe 301 angeordnet ist, führt über das Leitungsstück 305 zur Leitung 402, die die Rücklaufleitung vom Reinwasserverbraucher darstellt. Eine gemeinsame Leitung führt dann in den Sekundärkreislauf 201 des Wärmetauschers 230 und von dort über die Leitung 204 zu einem Rezirkulationsventil 203, das ein Dreiwege-Ventil ist, wobei ein Ausgang zum Auslauf führt. Der dritte Zweig führt über die Leitung 206 zur Wasserzulaufkammer 111.

Das gesamte System kann dadurch desinfiziert werden, daß das Rezirkulationsventil 203 in die Stellung Rezirkulation geschaltet wird, das heißt die Verbindung der Schlauchstücke 204 und 206 wird hergestellt.

Wenn der nicht näher dargestellte Reinwasserverbraucher, hier ein Hämodialysegerät, über eine Desinfektionsmittel-Ansaugvorrichtung verfügt, wird das Dialysegerät in den Desinfektionsmodus geschaltet und das in der Rücklaufleitung 402 fließende Desinfektionsmittelgemisch gelangt dann über das Ventil 203 in den Vorlaufbehälter 110 und von dort erneut in den Umkehrosmose- als auch den Dialysierkreislauf.

Alternativ kann über eine in der Zuführleitung 502 angeordnete Pumpe 501 Desinfektionsmittel oder Desinfektionsmittelkonzentrat in die Leitung 402 eingespeist werden. Die Einspeisung kann nur dann in den Umkehrosmosekreislauf gelangen, wenn das Rezirkulationsventil 203 so geschaltet ist, daß das Desinfektionsmittel in den Vorlaufbehälter 110 geführt wird.

Vorteilhafterweise kann das gesamte System auch heiß desinfiziert werden. Dazu wird das Ventil 203 ebenfalls in die Stellung Rezirkulation geschaltet der Sollwert der Heizeinrichtung 210 auf ca 90 Grad C gesetzt.

Die genannten Vorgänge werden durch die Steuereinheit 350 gesteuert, die durch eine nicht näher gezeichnete Verbindung durch das Hämodialysegerät angesteuert werden kann bzw. alternativ Signale an das angeschlossene Hämodialysegerät weitergeben kann, wie zum Beispiel ein Signal, um in den Desinfektionsmodus zu schalten.

Die Regel- und Steuereinheit 350 ist an die Leitfähigkeitsmeßzellen 220 und 340 elektrisch angeschlossen, um die Qualität des Rohwassers und des Reinwassers entsprechend zu überwachen.

Weiterhin ist die Regel- und Steuereinheit 350 mit dem Reinwassereingangsventil 410 verbunden, um dieses zu schalten, falls beispielsweise die Leitfähigkeitswerte nicht dem Sollwert entsprechen. Auf diese Weise kann der Zulauf zum Dialysegerät gestoppt werden. Das Ventil 410 ist ein Dreiwegeventil, dessen dritter Anschluß über die Leitung 404 zum Dreiwegeventil 420 in der Leitung 404 führt. Das Dreiwegeventil 420 ist ebenfalls an die Regel- und Steuereinheit 350 angeschlossen. Tritt nun ein Störfall ein, wird die Umkehrosmoseanlage über die Verbindungsleitung 404 kurzgeschlossen. Somit kann die Umkehrosmoseanlage weiter betrieben werden, ohne daß Permeat zum Verbraucher fließt. Nach Behebung der Fehlerursache oder auch bei Betriebsbeginn, benötigt eine Umkehrosmoseanlage eine geraume Zeit, bis die Permeatleitfähigkeit den Sollwert erreicht hat. Danach schalten die beiden Ventile 410 und 420 wieder auf Betrieb.

Die elektrischen Verbindungen sind jeweils gestrichelt dargestellt. Weitere Verbindungen bestehen zur Temperaturregeleinheit 214 und zum Rezirkulationsventil 203 sowie zur ersten Regel- und Steuereinheit 103, die ebenfalls mit dem Rezirkulationsventil 203 und zusätzlich mit dem Wassereingangsventil 102 im Rohwasseranschluß sowie dem Niveausensor 114 verbunden ist.

Bezugszeichenliste

| | |
|---|---|
| 100 | Einheit zur Regelung des Rohwasserzuflusses Verhinderung des Rückflusses von Wasser in das Leitungsnetz |
| 101 | Druckreduzierventil |
| 102 | Wassereingangsventil |
| 103 | erste Steuer- und Regeleinheit |
| 110 | Vorlaufbehälter |
| 111 | Wasserzulaufkammer |
| 112 | Notauslauf |
| 113 | Niveaumeßkammer |
| 114 | Niveausensor |
| 115 | Referenzmarke |
| 116 | Entlüftungseinrichtung |
| 200 | Einheit zur Erwärmung des Rohwassers |

und Bestimmung der Leitfähigkeit

201 Sekundärkreislauf
202 Primärkreislauf
203 Rezirkulationsventil
204 Verbindungsleitung
205 Verbindungsleitung
206 Verbindungsleitung
207 Verbindungsleitung
210 Heizeinrichtung
212 Heizelement
213 Temperaturfühler
214 Regeleinheit
219 Verbindungsleitung
220 Leitfähigkeitsmeßzelle
221 Verbindungsleitung
230 Wärmetauscher
300 Umkehrosmoseeinheit
301 Entspannungspumpe
302 Hochdruckpumpe
305 Verbindungsleitung
306 Entgasungseinrichtung
310 Umkehrosmosemodul
311 Rohwasserkompartiment
312 Reinwasserkompartiment
319 Reinwasserleitung
320 Unterdruckpumpe
321 Verbindungsleitung
330 Luftabscheider
331 Verbindungsleitung
332 Rückschlagventil
333 Verbindungsleitung
340 Leitfähigkeitsmeßzeile
341 Verbindungsleitung
342 Rückschlagventil
350 zweite Steuer- und Regeleinheit
355 Permeatleitung
360 Retentatleitung
401 Leitung zum Verbraucher
402 Rücklaufleitung vom Reinwasserverbraucher
403 Rückschlagventil
404 Verbindungsleitung
410 Wassereingangsventil zum Reinwasserverbraucher
420 Wasserrücklaufventil
500 Zuführeinrichtung von Desinfektionsmittel
501 Desinfektionspumpe
502 Zuführleitung für Desinfektionsmittel

**Ansprüche**

1. Verfahren zum Entgasen von bei der Umkehrosmose gewonnenem Reinwasser, dadurch gekennzeichnet, daß das Reinwasser aus dem Reinwasserkompartiment des Umkehrosmosemoduls mittels einer Unterdruckpumpe so abgepumpt wird, daß in dem Reinwasserkompartiment ein Unterdruck aufrechterhalten wird, und daß die sich dabei freisetzenden Gase in einem der Unterdruckpumpe nachgeschalteten Luftabscheider entfernt werden.

2. Verfahren nach Anspruch 1, dadurch gekennzeichnet, daß die Unterdruckpumpe so geregelt wird, daß sich ein Unterdruck von ca. 600 mm Hg ergibt.

3. Verfahren nach Anspruch 1 oder 2, dadurch gekennzeichnet, daß das dem Umkehrosmosemodul zugeführte Rohwasser vorgewärmt wird.

4. Umkehrosmoseanlage für die Erzeugung von Reinwasser für einen Reinwasserverbraucher, insbesondere Reinwasser für medizinische Zwecke, mit einem Vorlaufbehälter, einem Umkehrosmosemodul, einer Hochdruckpumpe in der Verbindungsleitung zwischen dem Vorlaufbehälter und dem Umkehrosmosemodul, einer Konzentratleitung, die den Umkehrosmosemodul mit dem Vorlaufbehälter verbindet, einer Permeatleitung und einer davon abzweigenden Rückführleitung zum Vorlaufbehälter, dadurch gekennzeichnet, daß in der Permeatleitung (355) am Ausgang des Reinwasserkompartiments (312) des Umkehrosmosemoduls (310) eine Entgasungseinrichtung (306) angeordnet ist.

5. Anlage nach Anspruch 4, dadurch gekennzeichnet, daß die Entgasungseinrichtung (306) eine Unterdruckpumpe (320) und einen Luftabscheider (330) aufweist.

6. Anlage nach Anspruch 4 oder 5, dadurch gekennzeichnet, daß zwischen dem Vorlaufbehälter (110) und dem Umkehrosmosemodul (310) eine Heizeinrichtung (210) angeordnet ist.

7. Anlage nach Anspruch 6, dadurch gekennzeichnet, daß der Heizeinrichtung (210) ein Wärmetauscher (230) vorgeschaltet ist, dessen Sekundärkreislauf (201) mit der Retentatleitung (360) und dessen Primärkreislauf (202) mit der Wasserzulaufkammer (111) in Verbindung steht.

8. Anlage nach einem der Ansprüche 4 bis 7, dadurch gekennzeichnet, daß in der Konzentratleitung (360) eine Entspannungspumpe (301) angeordnet ist, die mit der Hochdruckpumpe (302) gekoppelt ist.

9. Anlage nach einem der Ansprüche 4 bis 8, dadurch gekennzeichnet, daß der Vorlaufbehälter (110) eine Niveaumeßkammer (113) mit einem Niveausensor (114) aufweist, der mit einer ersten Steuer- und Regeleinheit (103) verbunden ist.

10. Anlage nach einem der Ansprüche 4 bis 9, dadurch gekennzeichnet, daß die Retentatleitung (360) vor dem Wärmetauscher (230) an eine Rücklaufleitung (402) des Reinwasserverbrauchers angeschlossen ist.

11. Anlage nach einem der Ansprüche 4 bis 10, dadurch gekennzeichnet, daß die Retentatleitung (360) vor dem Wärmetauscher (230) an eine Rückflußleitung (502) für Desinfektionsmittel angeschlossen ist.

12. Anlage nach einem der Ansprüche 4 bis 11, dadurch gekennzeichnet, daß der Sekundärkreislauf (201) des Wärmetauschers (230) über ein Rezirkulationsventil (203) sowohl mit dem Auslauf als auch mit dem Vorlaufbehälter (110) verbunden ist.

13. Anlage nach Anspruch 12, dadurch gekennzeichnet, daß das Rezirkulationsventil (203) elektrisch mit der ersten Steuer- und Regeleinheit (103) verbunden ist.

14. Anlage nach einem der Ansprüche 4 bis 13, dadurch gekennzeichnet, daß eine zweite Steuer- und Regeleinheit (350) vorgesehen ist, die mit dem Rezirkulationsventil (203), mit der Heizeinrichtung (210) und mit der ersten Steuer- und Regeleinheit (103) elektrisch verbunden ist.

15. Anlage nach Anspruch 14, dadurch gekennzeichnet, daß die zweite Steuer- und Regeleinheit (350) mit den Leitfähigkeitsmeßzellen (220, 340) sowie mit dem Reinwassereingangsventil (410) und mit dem Wasserrücklaufventil (420) elektrisch verbunden ist.

16. Anlage nach einem der Ansprüche 4 bis 15, dadurch gekennzeichnet, daß das in der zum Verbraucher führenden Verbindungsleitung (401) angeordnete Ventil (410) ein 3-Wege-Ventil ist, welches über eine Verbindungsleitung (404) mit einem, in der vom Verbraucher kommenden Verbindungsleitung (402) befindlichen 3-Wege-Ventil (420) verbunden ist.